(19) Europäisches Patentamt

European Patent Office

Office européen des brevets

(11) **EP 2 477 720 B1**

(12) **FASCICULE DE BREVET EUROPEEN**

(45) Date de publication et mention
de la délivrance du brevet:
**21.06.2017 Bulletin 2017/25**

(21) Numéro de dépôt: **10763769.6**

(22) Date de dépôt: **30.08.2010**

(51) Int Cl.:
**B01D 53/04** *(2006.01)*       **B01D 53/56** *(2006.01)*
**B01D 53/64** *(2006.01)*       **B01D 53/75** *(2006.01)*

(86) Numéro de dépôt international:
**PCT/FR2010/051795**

(87) Numéro de publication internationale:
**WO 2011/033201 (24.03.2011 Gazette 2011/12)**

(54) **PROCEDE DE PURIFICATION D'UN FLUX GAZEUX COMPRENANT DU MERCURE**

VERFAHREN ZUR REINIGUNG EINES QUECKSILBERHALTIGEN GASSTROMS

METHOD FOR PURIFYING A GAS STREAM INCLUDING MERCURY

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **17.09.2009 FR 0956400**

(43) Date de publication de la demande:
**25.07.2012 Bulletin 2012/30**

(73) Titulaire: **L'Air Liquide Société Anonyme pour
l'Etude et
l'Exploitation des Procédés Georges Claude
75007 Paris (FR)**

(72) Inventeurs:
• **MONEREAU, Christian
F - 34000 Montpellier (FR)**
• **BRIGLIA, Alain
F-49140 Corze (FR)**

(74) Mandataire: **Beroud, Amandine
L'AIR LIQUIDE S.A.
Direction de la Propriété Intellectuelle
75 Quai d'Orsay
75321 Paris Cedex 07 (FR)**

(56) Documents cités:
CA-A1- 983 675          DE-A1- 3 919 124
DE-A1- 19 717 798       FR-A1- 2 918 580
US-A- 4 889 698         US-A- 5 321 946
US-A1- 2009 007 785

**Description**

La présente invention est relative à un procédé de purification d'un flux gazeux comprenant du $CO_2$, du mercure élémentaire ($Hg^0$) et des oxydes d'azote (NOx).

Il s'agit plus précisément de développer un procédé de purification du $CO_2$ provenant d'une combustion, en particulier d'une oxy-combustion (combustion à l'oxygène pur ou avec un gaz plus pauvre en azote que l'air) à caractère industriel, permettant de le conditionner pour son transport et son stockage pour des différentes utilisations.

Les gaz de combustion de combustibles fossiles et/ou de biomasse ou d'incinération de déchets ou les gaz issus de haut fourneaux, de fours verriers peuvent contenir des métaux lourds tels que mercure, arsenic, fer, nickel sous forme métallique ou de sels..., des polluants organiques tels que alcools, aldéhydes, cétones, acides, esters et des composés type SOx ou NOx.

Or, l'application capture et stockage du $CO_2$ nécessite des moyens de purification pour éliminer au moins une partie des impuretés et/ou constituants cités plus haut, éléments préjudiciables au procédé d'enrichissement en $CO_2$ lui-même et/ou au stockage de ce $CO_2$ dans les couches géologiques appropriées.

En effet, cette application capture et stockage du $CO_2$ nécessite généralement un procédé d'enrichissement en $CO_2$ réalisé au moins en partie de manière cryogénique. Dans un tel procédé d'enrichissement en $CO_2$, les températures les plus froides atteintes sont généralement à l'intérieur de la fourchette de température -30/-60°C. De telles unités comprennent des échangeurs, des pots séparateurs liquide/vapeur, éventuellement des colonnes à distiller.

De façon générale, lorsque des débits élevés, par exemple de plusieurs milliers de $Nm^3$/h (mètre cube par heure dans les conditions standards) sont traités, il est classique dans les unités cryogéniques d'utiliser des équipements en aluminium, en particulier des échangeurs à plaques brasées en aluminium.

Les échangeurs à plaques brasées en aluminium offrent des performances en matière de surface d'échange par volume d'échangeur et en efficacité thermique ainsi que des possibilités d'arrangement des fluides inégalées. Il est également souhaitable dans ce cas d'utiliser des pots séparateurs et d'éventuelles colonnes à distiller en aluminium afin en particulier de simplifier les jonctions entre équipements.

Or, il est connu de l'industrie les problèmes de corrosion de l'aluminium par le mercure élémentaire ($Hg^0$).

La corrosion prend forme lors des phases de réchauffage des échangeurs, où le mercure élémentaire ($Hg^0$) accumulé sous forme solide inoffensive se liquéfie lorsqu'il atteint sont point triple (-38,83°C).

Afin de pouvoir traiter ce type de gaz, l'état de la technique impose d'installer une unité d'adsorption, préférentiellement un lit de garde pour arrêter le mercure élémentaire ($Hg^0$) en amont des équipements sensibles pour abaisser la teneur résiduelle en mercure à des valeurs < 0,1 $\mu$g/$Nm^3$, il est même mentionné dans certains articles des teneurs < 0,01 $\mu$g/$Nm^3$. Ceci est par exemple décrit amplement dans de nombreux articles comme par exemple Hydrocarbon Processing Avril 1999 «Design mercury removal Systems for liquid hydrocarbons by S.M. Wilhelm », ou Hydrocarbon Processing Novembre 1980 « Mercury - LNG's problem by J.E. Leeper » Les documents US 5,321,946, CA 983,675 et FR 2918580 A divulguent également des aspects pertinents de l'art antérieur. Les adsorbants usuellement utilisés sont en général :

- charbon activé, zéolite ou alumine imprégné généralement en soufre
- ZnO ou alumine chargé en sulfure de cuivre
- Zéolite échangée.

Dans le cas de procédé de séparation et purification de dioxyde de carbone, il est courant que le gaz à traiter contenant du mercure élémentaire ($Hg^0$) contienne aussi des oxydes d'azote (NO, $NO_2$).

Ces oxydes d'azote, en particulier le dioxyde d'azote ($NO_2$) présentent des effets néfastes de différentes natures sur les différents adsorbants.

Notamment, différents problèmes ont été identifiés :

| Adsorbant | Basse pression humide | Haute pression humide | Haute pression sec |
|---|---|---|---|
| Charbon actif imprégné soufre | Oxydation/Auto inflammation possible du Charbon actif en présence de $NO_2$ | | |
| Zéolite ou Alumine imprégné soufre | Non transposable sur des unités de grandes tailles | Co-adsorption suspectée du $NO_2$ limitant l'arrêt du mercure | |

(suite)

| Adsorbant | Basse pression humide | Haute pression humide | Haute pression sec |
|---|---|---|---|
| ZnO chargé sulfure de cuivre | Risque de destruction du support de fait de la présence d'acide, et formation de sulfate avec l'oxygène présent | | Co-adsorption du $NO_2$ limitant la capacité d'arrêt du mercure |
| Alumine chargé sulfure de cuivre | | | |

Par « basse pression humide », on entend une pression comprise entre la pression atmosphérique et 6 bara environ, et une présence d'eau supérieure à quelques ppm, de façon générale avant les sécheurs.

Par « Haute pression humide », on entend une pression supérieure à 6 bara, et une présence d'eau supérieure à quelques ppm de façon générale avant les sécheurs.

Par « Haute pression sec », on entend une pression supérieure à 6 bara, et une présence d'eau inférieure à 1 ppm de façon générale après les sécheurs.

Par « non transposable sur des unités de grande taille », on veut signifier que les volumes mis en jeu et les pertes de charge en résultant conduisent à des solutions non industrielles en raison de l'investissement et/ou de la consommation énergétique.

Partant de là, un problème qui se pose est de fournir un procédé amélioré de traitement d'un flux gazeux comprenant $CO_2$, des oxydes d'azote et du mercure élémentaire ($Hg^0$).

Une solution de l'invention est un procédé de purification d'un flux gazeux comprenant du $CO_2$, des oxydes d'azote et du mercure élémentaire ($Hg^0$) comprenant les étapes successives suivantes:

a) une étape de refroidissement du flux gazeux à une température T1 inférieure à la température ambiante
b) une étape d'élimination des oxydes d'azote du flux gazeux refroidi ;
c) une étape de réchauffage du flux issu de l'étape b), préférentiellement à une température comprise en 5°C et 150°C
d) une étape d'élimination du mercure élémentaire ($Hg^0$) du flux gazeux issu de l'étape c) ; et
e) une étape de récupération d'un flux gazeux enrichi en $CO_2$.

La température T1 à laquelle est refroidi le flux gazeux est inférieure à la température ambiante mais supérieure à la température de dépôt du mercure élémentaire ($Hg^0$) dans les conditions opératoires.

Par température ambiante, on entend la température qui peut être atteinte via un refroidissement par de l'air atmosphérique (aéroréfrigérant par exemple) ou par le circuit standard d'eau de réfrigération de l'usine. Suivant l'emplacement géographique, on parle d'une température généralement comprise entre 45 et 10°C. Cela signifie en pratique que pour atteindre la température T1, on doit mettre en oeuvre un quelconque des moyens de réfrigération bien connus de l'Homme de l'Art (groupe frigorifique, eau glacée, détente de fluides à travers vanne ou turbine, vaporisation de liquide...)

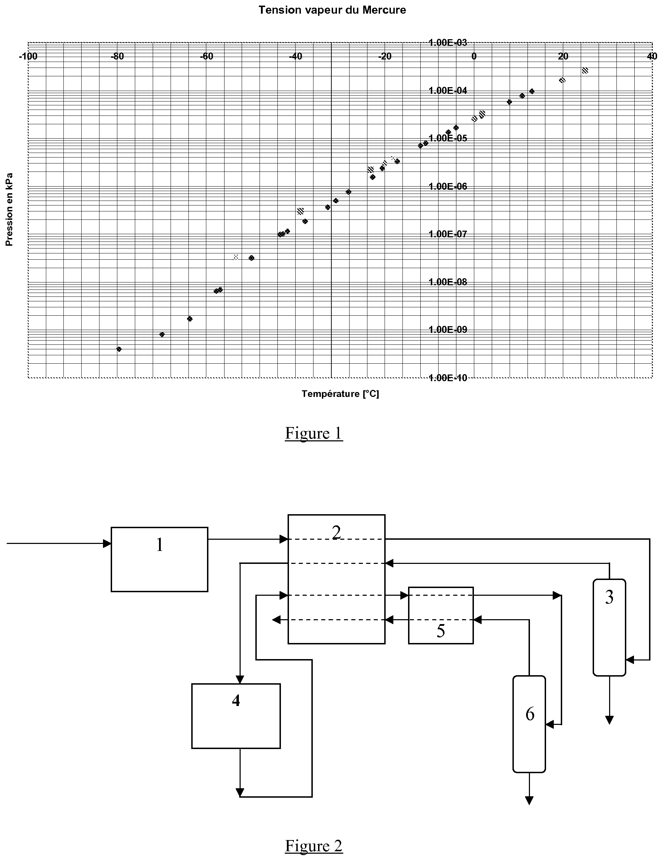

Comme illustré sur la figure 1, la température THg de dépôt du mercure élémentaire ($Hg^0$) est une fonction de la tension de vapeur du mercure. Ainsi, pour mettre en oeuvre l'étape a), l'homme du métier se basera sur la pression opératoire et la teneur en mercure dans le gaz à traiter.

Par exemple, les teneurs usuelles de mercure dans les flux de fumées de combustion sont de l'ordre de 20 $\mu g/Nm^3$, ce qui correspond à une tension de vapeur de mercure de $2,24.10^{-7}$ kPa.

Dans le cas d'un procédé à 20 bar on peut considérer un équivalent de tension de vapeur de $4.48\ 10^{-6}$ kPa, or l'on se rend compte sur le graphe de la Figure 1 qui représente la tension vapeur du mercure en fonction de la température (Données expérimentales tirées du document NISTIR 6643 du National Institute of Standard and Technology) que pour la valeur de $4.48\ 10^{-6}$ kPa , la température à laquelle le mercure élémentaire ($Hg^0$) se déposerait serait d'environ -13°C, ce qui est inférieur à la température à laquelle s'opère la séparation des NOx (ici, de l'ordre de -10°C), donc aucun dépôt de mercure élémentaire ($Hg^0$) ne s'effectuerait et donc le problème de corrosion devient inexistant. La température à laquelle s'opère la séparation des NOx est généralement comprise entre -10°C et -30°C mais l'on pourrait imaginer aussi des plages plus larges de +5 à -50°C.

Pour définir les conditions de dépôt du mercure, on pourra utiliser la relation suivante permettant de calculer la tension de vapeur PHg (en KPa) en fonction de la température T (en degré K)

$$PHg = \exp\ (-202.56 + 34.26\ LN\ (T))$$

Pour une teneur moyenne en mercure dans le flux gazeux correspondant à une pression partielle PHg, on calculera ainsi la température de dépôt THg à laquelle on rajoutera une marge éventuelle pour déterminer la température T1 minimale.

Selon le cas, le procédé selon l'invention peut présenter une ou plusieurs des caractéristiques suivantes :

- la température T1 est supérieure à la température THg de dépôt du mercure élémentaire ($Hg^0$) contenu dans le flux gazeux ;
- l'étape a) est effectuée au moyen d'un échangeur en aluminium brasé, de préférence un échangeur à plaques ;
- l'étape b) est effectuée au moyen d'une colonne de lavage ou une unité de séparation cryogénique;
- l'étape c) est effectuée au moyen d'un échangeur à plaques en aluminium brasé, éventuellement combiné à un réchauffeur d'appoint préférablement électrique, ou à vapeur ;
- l'étape d) est effectuée au moyen d'une unité d'adsorption comprenant au moins un adsorbant choisi parmi du charbon activé, préférentiellement dopé, encore plus préférentiellement dopé au soufre, une zéolite échangée, une zéolite dopée au soufre, une alumine dopée au soufre, de l'oxyde de zinc ou une alumine chargé en sulfure de cuivre ;
- l'unité d'adsorption est un lit de garde ;
- le flux gazeux issu de l'étape d) est refroidi à une température T2 inférieure à la température T1 de l'étape a), avant de subir une troisième étape d'épuration ;
- la température T2 est inférieure à la température de dépôt du mercure THg ;
- le flux gazeux subit préalablement à l'étape a) une étape de séchage, de préférence par compression et refroidissement, puis par une unité de séchage par adsorption de type quelconque (PSA, TSA...) ;
- la troisième étape d'épuration permet d'éliminer au moins partiellement au moins une impureté dans le flux gazeux, choisie parmi l'hydrogène, le monoxyde de carbone, l'azote, l'oxygène, l'argon et les gaz rares ;
- le flux gazeux est un flux de fumées de combustion ;
- le flux gazeux est un flux issu d'un haut- fourneau.

L'invention va être décrite plus en détail à l'aide de la Figure 2.

Un flux gazeux comprenant en outre du $CO_2$, des oxydes d'azote et du mercure issu d'un procédé d'oxycombustion est préalablement épuré de l'eau qu'il pourrait contenir dans un sécheur (1). Le flux gazeux ainsi épuré de son eau est refroidi par le biais d'un échangeur à plaques en aluminium brasé (2) à une température de l'ordre de -10°C, avant de subir une étape d'épuration consistant à ôter les oxydes d'azote en utilisant une colonne de lavage (3). Le flux gazeux ainsi épuré des oxydes d'azote va être réchauffé dans l'échangeur à plaques en aluminium brasé (2) à une température avoisinant les 130°C (en fonction du type d'adsorbant installé dans l'épurateur (4) cette température peut varier entre 5°C et 150°C pour obtenir une épuration efficace ; on pourrait aussi envisager une épuration plus froide en se pénalisant sur l'efficacité du système). Le flux gazeux ainsi réchauffé peut être épuré du mercure élémentaire ($Hg^0$), dans un lit de garde (4) contenant un adsorbant qui à la capacité d'arrêter le mercure élémentaire ($Hg^0$), comme par exemple charbon activé dopé, préférentiellement au soufre, une zéolite échangée, une zéolite dopée au soufre, une alumine dopée au soufre, de l'oxyde de zinc ou une alumine chargé en sulfure de cuivre. Le flux gazeux ainsi épuré du mercure élémentaire ($Hg^0$), est à nouveau refroidi par le biais d'échangeurs à plaques en aluminium brasé (2 puis 6) à une température inférieure à - 10°C pour ensuite subir des traitements successifs pouvant ôter d'autres impuretés.

Par lit de garde, on entend ici une unité d'adsorption non régénérable in situ et dont la charge d'adsorbant est remplacée au moins partiellement périodiquement. On notera que l'on pourrait également utiliser des adsorbants régénérables in situ, de type zéolite échangée commercialement disponible, dans un procédé de type TSA.

Le gaz issu du procédé de purification selon l'invention peut passer des étapes supplémentaires de traitement à des températures plus basses que la température THg de dépôt du mercure dans le flux gazeux à traiter, sans crainte de corrosion sur les échangeurs en aluminium brasés.

L'avantage notable de cette invention permet de traiter des gaz contenant du mercure élémentaire ($Hg^0$) et des oxydes d'azote ($NO_2$) en particulier sur des adsorbants qui n'ont pas la capacité de gérer ces deux impuretés en haute pression.

**Revendications**

**1.** Procédé de purification d'un flux gazeux comprenant du $CO_2$, des oxydes d'azote et du mercure élémentaire ($Hg^0$) comprenant les étapes successives suivantes :

a) une étape de refroidissement du flux gazeux à une température T1 inférieure à la température ambiante et supérieure à la température THg de dépôt du mercure élémentaire ($Hg^0$) contenu dans le flux gazeux,
b) une étape d'élimination des oxydes d'azote du flux gazeux refroidi,

c) une étape de réchauffage du flux épuré des oxydes d'azote, préférentiellement à une température comprise en 5°C et 150 °C,

d) une étape d'élimination du mercure élémentaire ($Hg^0$) du flux gazeux issu de l'étape c) au moyen d'au moins un adsorbant, et

e) une étape de récupération d'un flux gazeux enrichi en $CO_2$.

2. Procédé de purification selon la revendication 1, **caractérisé en ce que** l'étape a) est effectuée au moyen d'un échangeur en aluminium brasé, de préférence un échangeur à plaques.

3. Procédé de purification selon l'une des revendications 1 ou 2, **caractérisé en ce que** l'étape b) est effectuée au moyen d'une colonne de lavage ou une unité de séparation cryogénique.

4. Procédé de purification selon l'une des revendications 1 à 3, **caractérisé en ce que** l'étape c) est effectuée au moyen d'un échangeur à plaques en aluminium brasé, éventuellement combiné à un réchauffeur d'appoint préférablement électrique, ou à vapeur.

5. Procédé de purification selon l'une des revendications 1 à 4, **caractérisé en ce que** l'étape d) est effectuée au moyen d'une unité d'adsorption comprenant au moins un adsorbant choisi parmi du charbon activé, préférentiellement dopé, encore plus préférentiellement dopé au soufre, une zéolite échangée, une zéolite dopée au soufre, une alumine dopée au soufre, de l'oxyde de zinc ou une alumine chargé en sulfure de cuivre.

6. Procédé de purification selon la revendication 5 **caractérisé en ce que** l'unité d'adsorption est un lit de garde.

7. Procédé de purification selon l'une des revendications 1 à 6, **caractérisé en ce que** le flux gazeux issu de l'étape d) est refroidi à une température T2 inférieure à la température T1 de l'étape a), avant de subir une troisième étape d'épuration.

8. Procédé de purification selon la revendication 7 **caractérisé en ce que** la température T2 est inférieure à la température de dépôt du mercure THg.

9. Procédé selon l'une des revendications 1 à 8, **caractérisé en ce que** le flux gazeux subit préalablement à l'étape a) une étape de séchage.

10. Procédé de purification selon la revendication 9, **caractérisé en ce que** la troisième étape d'épuration permet d'éliminer au moins partiellement au moins une impureté dans le flux gazeux, choisie parmi l'hydrogène, le monoxyde de carbone, l'azote, l'oxygène, l'argon et les gaz rares.

11. Procédé de purification selon l'une des revendications 1 à 9, **caractérisé en ce que** le flux gazeux est un flux de fumées de combustion.

12. Procédé de purification selon l'une des revendications 1 à 9, **caractérisé en ce que** le flux gazeux est un flux issu d'un haut- fourneau.

**Patentansprüche**

1. Verfahren zur Reinigung eines $CO_2$-, Stickoxid- und elementares Quecksilber- ($Hg^0$) haltigen Gasstroms, das die folgenden aufeinanderfolgenden Schritte umfasst:

a) einen Schritt des Kühlens des Gasstroms auf eine Temperatur T1 unter der Umgebungstemperatur und über der Abscheidetemperatur THg des elementaren Quecksilbers ($Hg^0$), das in dem Gasstrom enthalten ist,

b) einen Schritt des Entfernens der Stickoxide aus dem gekühlten Gasstrom,

c) einen Schritt des Erwärmens des von den Stickoxiden gereinigten Stroms, bevorzugt auf eine Temperatur zwischen 5 °C und 150 °C,

d) einen Schritt des Entfernens des elementaren Quecksilbers ($Hg^0$) aus dem aus Schritt c) stammenden Gasstrom mittels zumindest eines Adsorptionsmittels, und

e) einen Schritt des Rückgewinnens eines mit $CO_2$ angereicherten Gasstroms.

**2.** Reinigungsverfahren nach Anspruch 1, **dadurch gekennzeichnet, dass** Schritt a) mittels eines Austauschers aus gelötetem Aluminium, bevorzugt einem Plattenaustauscher, ausgeführt wird.

**3.** Reinigungsverfahren nach einem der Ansprüche 1 oder 2, **dadurch gekennzeichnet, dass** Schritt b) mittels einer Waschkolonne oder einer kryogenen Trennvorrichtung ausgeführt wird.

**4.** Reinigungsverfahren nach einem der Ansprüche 1 bis 3, **dadurch gekennzeichnet, dass** Schritt c) mittels eines Plattenaustauschers aus gelötetem Aluminium, gegebenenfalls mit einem bevorzugt elektrischen oder Dampf-Zusatzerhitzer kombiniert, ausgeführt wird.

**5.** Reinigungsverfahren nach einem der Ansprüche 1 bis 4, **dadurch gekennzeichnet, dass** Schritt d) mittels einer Adsorptionsvorrichtung ausgeführt wird, die zumindest ein Adsorptionsmittel umfasst, ausgewählt aus bevorzugt dotierter, noch bevorzugter mit Schwefel dotierter Aktivkohle, ausgetauschtem Zeolith, mit Schwefel dotiertem Zeolith, mit Schwefel dotiertem Aluminiumoxid, Zinkoxid oder einem mit Kupfersulfid beladenen Aluminiumoxid.

**6.** Reinigungsverfahren nach Anspruch 5, **dadurch gekennzeichnet, dass** es sich bei der Adsorptionsvorrichtung um ein Schutzbett handelt.

**7.** Reinigungsverfahren nach einem der Ansprüche 1 bis 6, **dadurch gekennzeichnet, dass** der aus Schritt d) stammende Gasstrom auf eine Temperatur T2 unter der Temperatur T1 des Schrittes a) gekühlt wird, bevor er einen dritten Reinigungsschritt durchläuft.

**8.** Reinigungsverfahren nach Anspruch 7, **dadurch gekennzeichnet, dass** die Temperatur T2 unter der Abscheidetemperatur des Quecksilbers THg liegt.

**9.** Verfahren nach einem der Ansprüche 1 bis 8, **dadurch gekennzeichnet, dass** der Gasstrom vor Schritt a) einen Trocknungsschritt durchläuft.

**10.** Reinigungsverfahren nach Anspruch 9, **dadurch gekennzeichnet, dass** der dritte Reinigungsschritt ermöglicht, zumindest eine Verunreinigung im Gasstrom, ausgewählt aus Wasserstoff, Kohlenmonoxid, Stickstoff, Sauerstoff, Argon und Edelgasen, zumindest teilweise zu entfernen.

**11.** Reinigungsverfahren nach einem der Ansprüche 1 bis 9, **dadurch gekennzeichnet, dass** es sich bei dem Gasstrom um einen Strom von Verbrennungsrauchgasen handelt.

**12.** Reinigungsverfahren nach einem der Ansprüche 1 bis 9, **dadurch gekennzeichnet, dass** es sich bei dem Gasstrom um einen Strom handelt, der aus einem Hochofen stammt.

**Claims**

**1.** Method for purification of a gas flow containing $CO_2$, nitrogen oxides and elementary mercury ($Hg^0$) comprising the following steps in sequence:

a) a step to cool the gas flow to a temperature T1 lower than ambient temperature and higher than the deposition temperature THg of elementary mercury ($Hg^0$) contained in the gas flow,
b) a step in which nitrogen oxides are eliminated from the cooled gas flow,
c) a step in which the flow from which nitrogen oxides have been eliminated is heated, preferably to a temperature of between 5°C and 150°C,
d) a step in which in the elementary mercury ($Hg^0$) in the gas flow output from step c) is eliminated by means of at least one absorbent,
e) a step in which a gas flow enriched with $CO_2$ is recovered.

**2.** Purification method according to claim 1, **characterised in that** step a) is done using a brazed aluminium heat exchanger, preferably a plate exchanger.

**3.** Purification method according to one of claims 1 or 2, **characterised in that** step b) is done using a washing column or a cryogenic separation unit.

4. Purification method according to one of claims 1 to 3, **characterised in that** step c) is done using a brazed aluminium plate exchanger, possibly combined with a make up heater, preferably electric, or steam.

5. Purification method according to one of claims 1 to 4, **characterised in that** step d) is done using an adsorption unit comprising at least one adsorbent chosen from among active carbon, preferably doped, even more preferably doped with sulphur, an exchanged zeolite, a zeolite doped with sulphur, an alumina doped with sulphur, zinc oxide or an alumina containing copper sulphide.

6. Purification method according to claim 5, **characterised in that** the adsorption unit is a guard bed.

7. Purification method according to one of claims 1 to 6, **characterised in that** the gas flow output from step d) is cooled to a temperature T2 less than the temperature T1 in step a), before a third purification step is performed.

8. Purification method according to claim 7, **characterised in that** the temperature T2 less than the mercury deposition temperature THg.

9. Purification method according to one of claims 1 to 8, **characterised in that** the gas flow is subjected to a drying step before step a).

10. Purification method according to claim 9, **characterised in that** the third purification step is capable of at least partly eliminating an impurity in the gas flow, chosen from among hydrogen, carbon monoxide, nitrogen, oxygen, argon and rare gases.

11. Purification method according to one of claims 1 to 9, **characterised in that** the gas flow is a mix of combustion fumes.

12. Purification method according to one of claims 1 to 9, **characterised in that** the gas flow is output from a blast furnace.

**Tension vapeur du Mercure**

Figure 1

Figure 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5321946 A
- CA 983675

- FR 2918580 A